# EUROPEAN PATENT SPECIFICATION

(11) **EP 3 117 337 B1**
(45) Date of publication and mention of the grant of the patent: **21.10.2020**
(21) Application number: 15761849.7
(22) Date of filing: 12.03.2015
(51) Int. Cl.: G06F 15/173, H04L 12/721

(54) **SYSTEMS AND METHODS FOR INTELLIGENT WORKLOAD ROUTING**
SYSTEM UND VERFAHREN FÜR INTELLIGENTES ROUTING VON ARBEITSLASTEN
SYSTÈMES ET PROCÉDÉS DE ROUTAGE DE CHARGE DE TRAVAIL INTELLIGENT

(30) Priority: 13.03.2014 US 201461952537 P
(43) Date of publication of application: 18.01.2017
(73) Proprietor: JPMorgan Chase Bank, N.A., New York, NY 10179 (US)
(72) Inventor: SCHMITTER, Todd, Eagan, MN 44123 (US); ROCKS, Jonathan, Columbus, OH 43240 (US); KUSNIERZ, Matthew, Ealing W13 9NS (GB); TRIPATHI, Kamal, Bordentown, NJ 08505 (US); McCANN, Dean, Glasgow SCT G 61 4AW (GB); OSAKI, Shane, New York, NY 10075 (US); NEWMANN, Peter, Dublin, OH 43017 (US); CALHOUN, Jeon A., Columbus, OH 43215 (US); DATCU, Emil G., Ruskin, FL 33570 (US); LOGSDON, James P., Addison, TX 75001 (US); KUMAR, Munish, Paramus, NJ 07652 (US); KUMAR, Shankar, New Albany, OH 43054 (US); SINGH, Bhupendra Kumar, Garnet Valley, PA 19060 (US)
(74) Representative: Leonhard, Frank Reimund
(86) International application number: PCT/US2015/020092
(87) International publication number: WO 2015/138678

(56) References cited:
- WO-A1-2014/011376
- US-A1- 2004 162 901
- US-A1- 2005 160 133
- US-A1- 2006 031 576
- US-A1- 2006 212 532
- US-A1- 2006 224 725
- US-A1- 2013 019 018
- US-B1- 7 757 236

## Description

The present invention generally relates to the intelligent routing of workload in a computer network, as system or as method.

Distributed computer systems generally include both client and server devices, with the client devices making requests of the servers to perform units of work. The clients are generally end-user devices with minimal capabilities, such as workstations, ATMs, kiosks, mobile devices, etc., whereas the servers are generally high-end computer platforms such as mainframe systems or clusters of high-end commodity servers. Within the range of server-side platforms available, however, there is a wide range in terms of both computing capacity and performance.

Document US 2005/160133 A1 discloses a system wherein a network dispatcher intelligently routes requests to servers allocated in virtual clusters based on rules. The rules based routing criteria may include analysis of the requester's identity, requested server application, time-of-day or day of week.

Document US 2006/031576 A1 discloses an ad-hoc network in which multi-hop paths are determined in a constantly changing topology wherein nodes are in movement. It also mentions use of weights to find the paths to the destination.

Systems and methods for intelligent workload routing are disclosed. According to one embodiment (claim 1), a system for intelligent workload routing includes a first processing platform having a first characteristic; a second processing platform having a second characteristic; and a workload router in communication with the first processing platform and the second processing platform. The workload router receiving a message comprising a workload request and routing the workload request to the first processing platform or the second processing platform. This controlled by a workload request characteristic, the first characteristic or the second characteristic.

The processing platforms may include a mainframe computer, a server, a clustered server, etc.

The system may also include at least one client device that sends the message to the workload router. The client device may comprise, for example, an automated teller machine.

The workload router may route the workload request based on at least one routing rule.

The routing rule may include at least one of a platform override rule, a message-type filter rule, a load balance rule, a default destination rule, a queue-depth load balance rule, a compute-cost cap rule, a latency minimization rule, a processing platform unavailability rule, a health metric rule, a prioritization rule, and a predictive rule.

The workload router may route the workload to a data center comprising one of the first processing platform and the second processing platform.

A method performs an intelligent workload routing. The method includes a workload router comprising at least one computer processor receiving a message comprising a workload request. The workload router identifies one of a plurality of processing platforms to route the workload request. The workload router routes the message to the identified processing platform.

The plurality of processing platforms may include a mainframe computer and a clustered server.

The message may be received from a client device. The client device may be an automated teller machine.

The step of the workload router identifying one of a plurality of processing platforms to route the workload request may include the workload router determining a message type of the workload request.

The message type of the workload request may be determined from an identifier in the message. The identifier may identify a priority of the workload request.

The step of the workload router identifying one of a plurality of processing platforms to route the workload request may include the workload router applying at least one routing rule to identify the processing platform.

The routing rule may be based on a status of at least one of the processing platforms. In another embodiment, the routing rule may be based on a utilization rate of at least one of the processing platforms.

The routing rule may route the workload request to the processing platform identified in the message. In another embodiment, the routing rule may route the workload request to a processing platform to balance a load among a plurality of the processing platforms. In another embodiment, the routing rule may route the workload request to the processing platform with the lowest latency. In another embodiment, the routing rule may route the workload request to the processing platform that will complete it first. In another embodiment, the routing rule may route the workload request to the processing platform that similar message requests have been routed. In another embodiment, the routing rule may route the workload request to a processing platform based on an anticipated workload.

The workload request may be routed a data center comprising the identified processing platform.

The present invention defines a system according to claim 1 and a method according to claim 6. Further embodiments are set forth in the dependent claims 2-5 and 7-12.

For a more complete understanding of the present invention, the objects and advantages thereof, reference is now made to the following description taken in connection with the drawings.
Figure 1 is a block diagram of a system for intelligent workload routing according to one embodiment;
Figure 2 is a screenshot of an exemplary management interface according to one embodiment;
Figure 3 depicts a method for intelligent workload routing according to one embodiment;
Figure 4 depicts a method for monitoring performance metrics according to one embodiment; and
Figure 5 depicts a method for interactive workload router management according to one embodiment.

Several embodiments of the present invention and their advantages may be understood by referring to all Figures.

A distributed computer system may include one or more processing platforms, including mainframe systems, clustered servers, servers, etc. In general, the mainframe system may perform tasks more quickly (*i.e.,* high performance) and may have a larger capacity density than servers or clustered servers. Mainframe systems, however, are generally more costly and cannot be scaled as easily and as cheaply as a server, or a cluster of commodity servers.

Although a cluster of commodity servers may generally have lower performance in terms of processing speed, the cluster may scale more cost effectively to provide a larger total capacity than the mainframe system. Large enterprises typically operate a mix of server-side platforms and are faced with a challenge of how to route the client workload requests to an appropriate target server that is capable of performing the processing within acceptable timeframes.

There are generally two ways in which workload requests may be routed in a distributed computer system. One way is to hardcode the manner in which work is distributed. In this method, the way in which the workload is distributed does not change. The other method is to distribute either all of, or none of, the workload.

In contrast, the embodiments that are disclosed herein are directed to dynamic routing of workload requests using an intelligent workload router, or "IWR".

The intelligent workload router may receive periodic status messages from the devices within the distributed computer system, which may be referred to as "processing platforms." In another embodiment, the intelligent workload router may request status updates from one or more of the processing platforms. The status may identify the processing platform's configuration (e.g., the amount of memory, CPU type, etc.), the current utilization status (e.g., percent/amount of memory usage, CPU usage, overall utilization, etc.), health status, timeliness in responding, location, and any other information that may be helpful to the intelligent workload router in determining where to route the workload request.

The processing platform(s) may execute an application that provides this status to the intelligent workload router.

Agents or applications may be deployed to each node in the processing platform(s) and may provide status metrics back into the intelligent workload router. In one embodiment, the intelligent workload router may infer certain metric data independent of the agent or application.

The intelligent workload router may receive a workload request from a client device, such as a workstation, ATM, kiosk, mobile device, etc. The workload request may include a header, or some other identifier, that identifies the type of workload (e.g., workloads that can only execute on a mainframe; workloads that bias toward a mainframe but could be executed by a server/cluster of servers, workloads that bias toward a server/cluster of servers but could be executed by a mainframe, etc.). Other identifications may include a priority indicator, a location indicator, client type, requester identifier, estimated time to complete, or any other identification that could be helpful in determining where to route the message. In one embodiment, a standardized message format may be used for efficiency.

The intelligent workload router may extract the identifier and apply a set of routing rules to determine how to route the workload request. Example routing rules include, but are not limited to, one or more of the following:
1. Platform Override: this rule may allow the client to specify a specific data center, processing platform or type of processing platform as part of the message header. If the message does not identify a specific data center, processing platform or type of processing platform, no additional routing logic may be applied. This allows a client to override routing decisions and bypass the intelligent workload router.
2. Message-Type Filtering: this rule may filter messages according to their type (e.g., the messages' business function code) to a processing platform.
3. Processing (Elapsed) Time Switching: this rule may compare the baseline processing time for each of the message's primary processing platform with the average processing time for the recent rolling window. If the recent processing times are significantly greater than the baseline, this rule may route the message to the secondary processing platform.
4. Simple Load-balancing: this rule may route messages to different processing platforms in order to keep the load distributed as desired.
5. Default Processing platform: this rule may route all messages to the same, default/configured, processing platform, without applying any routing logic. This rule exists simply to ensure that in the event that no other routing rules make a decision (e.g., due to lack of data), that a default decision is made.
6. Queue-Depth Load-Balancing: this rule may consider the average queue depth of a configured primary processing platform. If the average queue depth exceeds a threshold number, then certain message types may be routed to a secondary processing platform (unless that platform is also over-worked).
7. Compute-Cost Capped: this rule may monitor the total spend on mainframe computing time accrued within a defined window. If the spend reaches a specified maximum, this rule may route subsequent jobs, messages, and/or requests to the secondary processing platform until the defined window expires, thereby capping the total cost of computing on the mainframe. In this case of a CPU time rule, this rule may apply to the mainframe only where the cost model is based on exploiting time on the processors. As a result, the routing rules will be influenced by CPU-time related metrics from the mainframe, which can be obtained from the MainView.
8. Latency Minimizing: this rule may route messages to the data center that is closest to the originating client. The rule may not make the decision between distributed/mainframe processing platforms, only between different data centers containing these processing platforms. In one embodiment, the closest data center for each originating client may be maintained as reference data (rule parameters). In another embodiment, this closest data center may be dynamically inferred from message metadata or attributes on the message.
9. Platform Unavailable Detector / Latency Monitoring: this rule may detect if a processing platform or data-center is completely unavailable/unreachable and routes to a backup processing platform /data-center if so. Unavailability may be considered a special case (infinite) of high latency. In one embodiment, this rule may be generalized to be a high latency threshold routing switch. If latency above a configured threshold to an end-point processing platform is detected, then this rule would redirect messages to a secondary/backup processing platform.
10. Health Metrics Monitoring: this rule may monitor the health of each processing platform (e.g., memory utilization; input-output load averages, CPU load averages, etc.). A comparison of a processing platform's health with its historical baseline/averages may detect deterioration in the health of a processing platform which may trigger the routing of messages to a secondary processing platform. It may also trigger alerts so that the device can be diagnosed, serviced, repaired, replaced, etc.
11. Prioritization: this rule routes messages based on their priority. For example, during peak ATM usage, workload requests may be routed to a mainframe. During non-peak hours, the workload requests from ATMs may be routed according to other routing rules.
12. Historical: this rule may route a message in the same way that a prior similar message was routed.
13. Predictive: this rule may route a message according to an anticipated workload.

In one embodiment, a rules engine may be provided. Each rule may be assigned a weight, and the weighted average decision made by all rules may be used to route each message.

In one embodiment, a routing rule may make partial decisions, such as routing the message to a particular data center, but may permit other rules to decide how the message processed at that data center (e.g., which processing platform within the data center is used).

In another embodiment, a routing rule may return a processing platform containing a placeholder. For example, a latency rule might return a routing decision of "datacenterX. {*}", while the queue-depth routing rule might then return "{*}.mainframe". The two decisions may be combined to get a complete destination (datacenterX.mainframe).

In another embodiment, the routing rule may return a list of multiple processing platforms along with a "strength of conviction" for each. This strength of conviction may be a continuous (i.e., not discreet) variable that a rule could determine based on the data it monitors. For example, in the latency reacting routing rule example, a single cut-off threshold where it makes a switch to a different data-center or processing platform may not be desirable. Instead, two or more routing decisions with associated weightings that vary according to the latency to each data-center or processing platform may be returned. The intelligent workload router may then combine these multiple decisions with the weight that a health based rule gave to destination platform (mainframe/distributed) in each data center. Thus, a message may be routed to a data center with worse latency because the data center with good (i.e. low) latency actually has a huge queue depth and its processing platforms are overloaded.

In addition, a combination of any of these routing rules may be used to route a message. Moreover, the routing rules, which may be dynamically configurable, may operate on different views in order to make routing decisions. For example, the rules may consider historical data and/or real time data to make routing decisions.

Although this disclosure may refer to processing platforms that include mainframe computers, servers, and clusters of commodity servers, it should be recognized that the disclosure is applicable to any environment in which more than one computing platform may operate. The computer platforms that are available may differ in computing capacity (e.g., high capacity, medium capacity, low capacity, etc.), may have similar capacities, may have different sizes, may have different processing speeds/latencies, may have different physical locations, etc. For example, there may be a standard hardware configuration for all servers, and multiple data centers may have different sizes. The routing decision may consider each data center as an individual target with the number of available servers in each cluster contributing to each target's capacity for work and therefore response time.

As another example, the processing platforms may be identical, but because of maintenance or hardware failure, or some other type of bias (e.g., network latency), one processing platform's processing time may start to degrade relative to the other. Therefore, dynamic routing may be used to improve, or optimize, the distribution of workload requests.

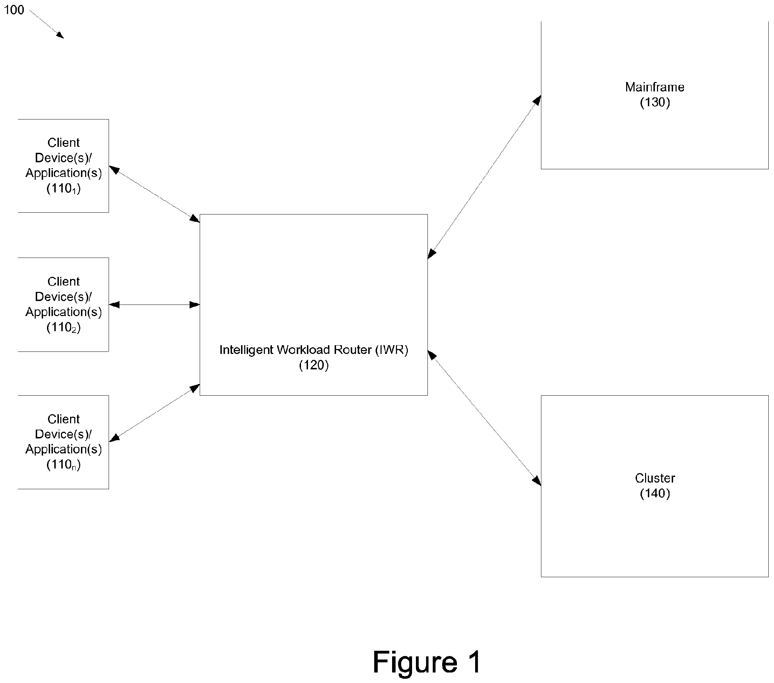

Referring to Figure 1, a system for intelligent workload routing is disclosed according to one embodiment. System 100 may include client devices and/or client applications 110₁ 110₂, ... 110ₙ that may communicate a request to intelligent workload router 120 via a network (e.g, the Internet, a VPN, hardwiring, etc.). Client devices and/or client applications 110₁ 110₂, ... 110ₙ may include servers, workstations, kiosks, ATMs, mobile devices, desktop computers, tablet computers, or any other suitable device.

In one embodiment, intelligent workload router 120 may be provided. Intelligent workload router 120 may receive the request from may include client devices and/or client applications 110₁ 110₂, ... 110ₙ. Intelligent workload router 120 may then process the request in order to route the request to mainframe 130 and/or 140.

In one embodiment, intelligent workload router 120 may include a message broker, such as the IBM WebSphere Message Broker, the IBM Integration Bus.

In one embodiment, one or more of the following attributes or each processing platform may be considered by intelligent workload router 120 in determining how to route workload:
(1) Performance: In one embodiment, the solution may focus on minimizing latency.
(2) Scalability: As workload is moved away from the mainframe, the volume of work going through the routing framework increases. Therefore, the router framework may be scalable.
(3) Maintainability: In order to handle changing routing rules, in one embodiment, one or more of the components may be tunable. In addition, queues may be added, and new routes may be established.

In one embodiment, an application container may be provided. Example application containers include Tomcat and WebSphere. The intelligent workload router may work with a variety of application containers.

In one embodiment, intelligent workload routing system and method described herein may increase system performance. For example, assuming that the cost of a message being processed by the intelligent workload router is an additional 3.5 milliseconds of latency, the intelligent workload router may handle at least 250 messages per second per CPU core. Given that the processing time of the existing messages ranges from 50-150ms, the additional 3.5ms latency represents an overhead of approximately 2-7% of processing time, which is a reasonable amount of overhead as the total processing time is still under the target maximum processing time of 250ms.

In one embodiment, the intelligent workload routing rules may consider existing message header and payloads without introducing the need to set any new message headers to change the format of the payload. The client application does not need to change in any way to enable their messages to be processed by the intelligent workload router and is fully encapsulated as to whether the message was processed by the mainframe or cluster of servers.

In one embodiment, the design and architecture of the intelligent workload router readily lends itself to high availability and scalability. The intelligent workload router may support availability and scalability by running multiple nodes in a cluster. If any node fails, processing may be seamlessly taken over by one of the other nodes. As message volumes increase, the system may be scaled by increasing the number of nodes running in the cluster.

In one embodiment, the intelligent workload router may support the ability to make changes to the routing rules at runtime. The routing rules may be cached by the intelligent workload router for performance purposes, but may be periodically refreshed from the database (e.g., every 10 seconds, every 30 seconds, every minute, etc.) or as necessary and/or desired. This enables the changes to the routing rule parameters made at the database level to be recognized in near real-time or as desired. Changes to configurable rule parameters may be made through the web front-end and may be applied to the router that served the web request to modify the data. This may be done immediately, periodically, or as necessary and/or desired. In one embodiment, any change in the routing rules may result in all instances of the intelligent workload router immediately refreshing their caches.

In one embodiment, routing rules may operate on timeseries data sets that may be published into the intelligent workload router from agents/applications that may monitor the health, performance, workload, etc. of the processing platforms. The mechanism for posting this metrics data into the router may be via Java Message Service (JMS). For example, one or more of the following agents may be used:

Distributed platform agents: for example, a combination of top/Wiley to access platform data from the hosts in the clusters. In one embodiment, Wiley is available from Computer Associates.
Mainframe platform agents: for example, the MainView API may be used to access relevant platform data from the mainframe;
Queue depth agent: this may monitor the queue depth for each of the processing platforms. This may be a standalone agent, or it may be deployed as a component within the intelligent workload router itself;
Latency monitoring and platform availability agent: this agent may provide latency metrics between the various processing platforms and/or data-centers; additionally unavailability of a processing platform may be treated the same way, e.g. infinite latency.

Other agents may be used as is necessary and/or desired.

The attributes that are captured by the metrics collection agents may differ from platform to platform.

In one embodiment, messages may not follow the JMS conventions of using delimited attributes for header variables. Instead, the body/payload of the message may contain a fixed-length format header portion, followed by the true payload. This header and payload may be encoded as a single string. Thus, the intelligent workload router may need to have knowledge of the fixed-length header format so that relevant attributes can be extracted in order to make routing decisions.

Examples fields that may be extracted for routing logic include the message type (called "BusinessFunctionCode"), environment code, etc.

In another embodiment, the message header may be updated to move message attributes into standard JMS header attributes to improve routing performance. For example, a standardized template of message header fields may be used so that the intelligent workload router may make routing decisions to avoid the need to de-serialize and inspect the payload as well.

In still another embodiment, the header may be dynamically parsed using run-time loaded configuration.

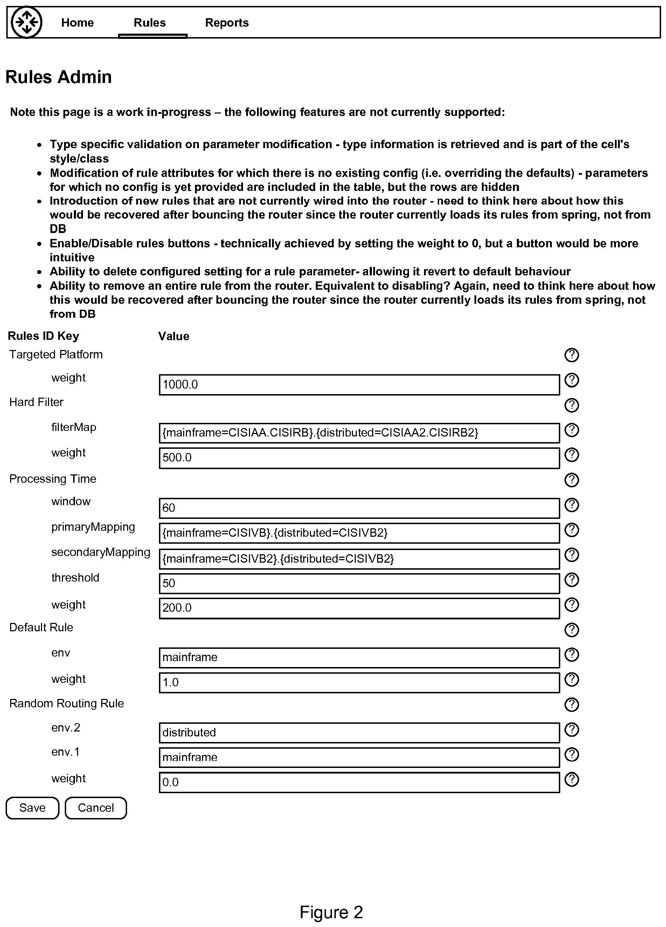

In one embodiment, changes to the configuration of the routing rules may be made in real-time, or substantially in real-time, through, for example, a web-interface that may be implemented within the intelligent workload router. Figure 2 is a screenshot of an exemplary interface according to one embodiment that illustrates different weightings given to different rules.

In addition, the interface may further include type validation of rule parameters, the ability to add new routing rules, the ability to configure new rule parameters, and the ability to remove routing rules and rule parameter overrides, among others.

In one embodiment, the intelligent workload router may be implemented as a single system/device listening to a message queue. In another embodiment, the intelligent workload router may be implemented as multiple routers. The use of multiple routers mitigates the possibility of one router being down and messages being stuck in the queue.

In one embodiment, an attribute, such as "BusinessFunctionCode," may be extracted from the message header and may be used to represent the "type" of the message. Routing rules may be configured to only operate on specific message types. For example, three message types may be considered:
Workload Type A: workloads that would execute only on a mainframe;
Workload Type B: workloads that would be bias to a mainframe but could be migrated to a cluster;
Workload Type C: workloads that would be bias to a cluster but could be migrated to a mainframe.

Other numbers of message types, and types of message types, may be used as necessary and/or desired.

In one embodiment, the interactive workload router platform agent components gather the respective platform's performance metrics and send those metrics via JMS message publication or other format on a performance-specific message topic. A mainframe agent, for example, may use an application, such as MainView, to publish its performance metrics. A cluster agent may, for example, use both the Unix top command and/or CA's Wily Introscope to monitor and/or publish the cluster's performance metrics.

The interactive workload router may subscribe to the performance-specific message topic, execute on the routing rules, and make routing decisions. This interactive workload router may also retrieve messages from a client-facing message broker instance, and may pass the message to the interactive workload router component along with the routing instructions. The interactive workload router may also process the message facts received from the system that processed this message and may pass it to the message archival process.

The interactive workload router may receive the message and routing instructions and forward the message to the appropriate destination message queue.

The interactive workload router message archival process may receive the message processing facts and archives them in a repository. The message processing facts may be further used by the router to determine the stress in the system and re-direct messages from the stressed system.

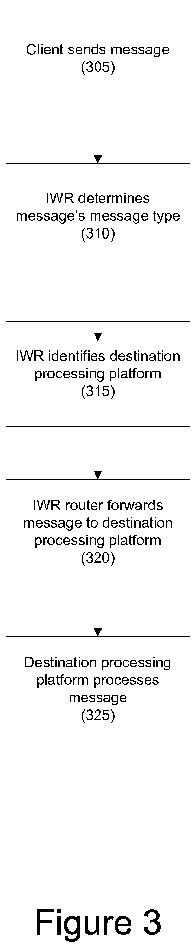

Referring to Figure 3, an example method for intelligent workload routing is provided according to one embodiment. In step 305, a client may send a message that may include a workload to an interactive workload router for processing.

In step 310, the interactive workload router may receive the message and determine the workload type. In one embodiment, the interactive workload router may analyze the message's header to determine the workload type. In another embodiment, the interactive workload router may analyze the workload itself. Other ways of determining the workload type may be used as is necessary and/or desired.

In step 315, the interactive workload router component may determine which processing platform out of a plurality of processing platforms to route the message. In one embodiment, each processing platform may be registered with the interactive workload router so that the interactive workload router has access to each processing platform's capabilities.

In one embodiment, the interactive workload router may receive metrics, such as current/anticipated queue, health, etc. from the processing platforms, and may consider these metrics in the routing decision.

In one embodiment, the interactive workload router may apply one or more routing rule, for example, platform override, message-type filtering, processing (elapsed) time switching, simple load-balancing, default destination, queue-depth load-balancing, compute-cost capped, latency minimizing, platform unavailable detector / latency monitoring, health metrics monitoring, prioritization, historical, predictive, etc., discussed above. Any suitable rule or basis for routing the message to a particular processing platform may be used as is necessary and/or desired.

In one embodiment, a combination of one or more of the workload type, routing rule, and processing platform metrics may be used in determining the destination processing platform for the message.

In step 320, the interactive workload router may route the message to the destination processing platform.

In step 325, the destination processing platform receives and processes the message.

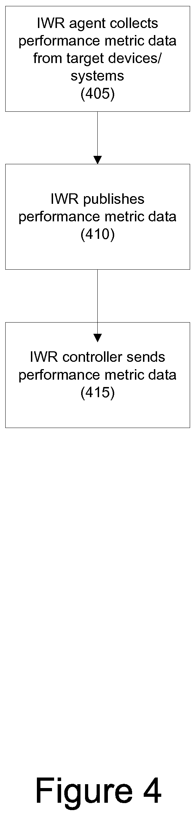

Referring to Figure 4, a method for monitoring performance metrics is provided according to one embodiment. In step 405, the interactive workload router agent component may collect performance metrics from the processing platforms (i.e., mainframe, servers, clusters).

In step 410, the interactive workload router agent component may publish the performance metric data via message topic.

In step 415, the interactive workload router controller component may process performance metric data, then may send the performance metric data to the interactive workload router archive process.

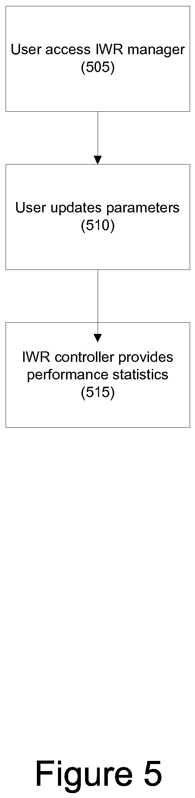

Referring to Figure 5, a method for interactive workload router management is provided according to one embodiment. In step 505, the user may access the interactive workload router manager component.

In step 510, the user may enter, modify, or update user-configurable parameters, and these parameters may be updated on the interactive workload router controller component.

In step 515, performance statistics may be provided by the interactive workload router. This may be in real-time, substantially in real-time, or historically through the interactive workload router archive process.

Although JMS has been disclosed herein as the exemplary protocol interacting among different devices, including, for example, client devices, the intelligent workload router, the server devices, etc. It should be noted that other communication protocols may be used, including HTTP, REST/SOAP, RMI, and others as is necessary and/or desired.

Furthermore, although the routing of discrete units of work in the form of messages has been disclosed, it should be recognized that the disclosure is not so limited. Other types of "work," including streaming data/events, batch processing of incoming data that may be delivered through any suitable mechanism (e.g., file import) are within the scope of this disclosure.

Hereinafter, general aspects of implementation of the systems and methods of the invention will be described.

The system of the invention or portions of the system of the invention may be in the form of a "processing machine," such as a general purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement the invention may be a general purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that is capable of implementing the steps of the processes of the invention.

The processing machine used to implement the invention may utilize a suitable operating system. Thus, embodiments of the invention may include a processing machine running the iOS operating system, the OS X operating system, the Android operating system, the Microsoft Windows™ 8 operating system, Microsoft Windows™ 7 operating system, the Microsoft Windows™ Vista™ operating system, the Microsoft Windows™ XP™ operating system, the Microsoft Windows™ NT™ operating system, the Windows™ 2000 operating system, the Unix operating system, the Linux operating system, the Xenix operating system, the IBM AIX™ operating system, the Hewlett-Packard UX™ operating system, the Novell Netware™ operating system, the Sun Microsystems Solaris™ operating system, the OS/2™ operating system, the BeOS™ operating system, the Macintosh operating system, the Apache operating system, an OpenStep™ operating system or another operating system or platform.

It is appreciated that in order to practice the method of the invention as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above may, in accordance with a further embodiment of the invention, be performed by a single component. Further, the processing performed by one distinct component as described above may be performed by two distinct components. In a similar manner, the memory storage performed by two distinct memory portions as described above may, in accordance with a further embodiment of the invention, be performed by a single memory portion. Further, the memory storage performed by one distinct memory portion as described above may be performed by two memory portions.

Further, various technologies may be used to provide communication between the various processors and/or memories, as well as to allow the processors and/or the memories of the invention to communicate with any other entity; *i.e.,* so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of the invention. The set of instructions may be in the form of a program or software. The software may be in the form of system software or application software, for example. The software might also be in the form of a collection of separate programs, a program module within a larger program, or a portion of a program module, for example. The software used might also include modular programming in the form of object oriented programming. The software tells the processing machine what to do with the data being processed.

Further, it is appreciated that the instructions or set of instructions used in the implementation and operation of the invention may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, *i.e*., to a particular type of computer, for example. The computer understands the machine language.

Any suitable programming language may be used in accordance with the various embodiments of the invention. Illustratively, the programming language used may include assembly language, Ada, APL, Basic, C, C++, COBOL, dBase, Forth, Fortran, Java, Modula-2, Pascal, Prolog, REXX, Visual Basic, and/or JavaScript, for example. Further, it is not necessary that a single type of instruction or single programming language be utilized in conjunction with the operation of the system and method of the invention. Rather, any number of different programming languages may be utilized as is necessary and/or desirable.

Also, the instructions and/or data used in the practice of the invention may utilize any compression or encryption technique or algorithm, as may be desired. An encryption module might be used to encrypt data. Further, files or other data may be decrypted using a suitable decryption module, for example.

As described above, the invention may illustratively be embodied in the form of a processing machine, including a computer or computer system, for example, that includes at least one memory. It is to be appreciated that the set of instructions, *i.e.,* the software for example, that enables the computer operating system to perform the operations described above may be contained on any of a wide variety of media or medium, as desired. Further, the data that is processed by the set of instructions might also be contained on any of a wide variety of media or medium. That is, the particular medium, *i.e*., the memory in the processing machine, utilized to hold the set of instructions and/or the data used in the invention may take on any of a variety of physical forms or transmissions, for example. Illustratively, the medium may be in the form of paper, paper transparencies, a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors of the invention.

Further, the memory or memories used in the processing machine that implements the invention may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the system and method of the invention, a variety of "user interfaces" may be utilized to allow a user to interface with the processing machine or machines that are used to implement the invention. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method of the invention, it is not necessary that a human user actually interact with a user interface used by the processing machine of the invention. Rather, it is also contemplated that the user interface of the invention might interact, *i.e*., convey and receive information, with another processing machine, rather than a human user. Accordingly, the other processing machine might be characterized as a user. Further, it is contemplated that a user interface utilized in the system and method of the invention may interact partially with another processing machine or processing machines, while also interacting partially with a human user.

## Claims

1. **System** for intelligent dynamic workload routing, comprising:
a first processing platform (130,140) having a first characteristic;
a second processing platform (140,130) having a second characteristic;
and a workload router (120) in communication with the first processing platform (130,140) and the second processing platform (140,130);
the workload router (120) configured to
receive a first message comprising the first characteristic from the first processing platform (130,140);
receive a second message comprising the second characteristic from the second processing platform (140,130);
receive a message comprising a workload request comprising a workload request characteristic;
apply a set of routing rules to the workload request to determine how to route the workload request and to assign a weight to the outcome of each rule, wherein
each outcome identifies the first processing platform or the second processing platform (140,130);
determine a weighted average of the weighted outcomes;
route the workload request to the first processing platform (130,140) or the second processing platform (140,130) based on the weighted average of the weighted outcomes and at least one of a workload request characteristic of the workload request, the first characteristic and the second characteristic.

2. System of claim 1, wherein the first processing platform (130,140) comprises a mainframe computer (130) and/or the second processing platform (140,130) comprises at least one clustered server (140).

3. System of claim 1, wherein the workload router (120) is configured to route the workload to a data center comprising the first processing platform (130,140) or the second processing platform (140,130).

4. System of claim 1, further comprising at least one client device (110₁,110₂,110ₙ) that sends the message to the workload router, preferably the at least one client device (110₁,110₂,110ₙ) comprises an automated teller machine.

5. System of claim 1, wherein the routing rules comprise one or more of a platform override rule, a message-type filter rule, a load balance rule, a default destination rule, a queue-depth load balance rule, a compute-cost cap rule, a latency minimization rule, a processing platform unavailability rule, a health metric rule, a prioritization rule, or a predictive rule.

6. **Method** for intelligent workload routing, comprising the steps of a workload router (120),
comprising a computer processor receiving a message comprising a workload request comprising a workload request characteristic;
the workload router (120) receiving a first status message comprising a first characteristic from a first processing platform (130);
the workload router (120) receiving a second status message comprising a second characteristic from a second processing platform (140);
the workload router applying a plurality of routing rules to the workload request and assigning a weight to the outcome of each routing rule;
wherein each outcome identifies the first platform or the second platform (130, 140);
whereby the workload router (120) identifies (315) one of the processing platforms (130,140) where to route the workload request;
the workload router determining a weighted average of the weighted outcomes; and the workload router (120) routing (320) the workload request to the identified processing platform, based on the weighted average of the weighted outcomes and at least one of a workload request characteristic, the first characteristic and the second characteristic.

7. Method of claim 6, wherein the workload router (120) routes (320) the workload to a data center comprising the identified processing platform (130,140).

8. Method of claim 6, wherein the plurality of processing platforms comprises a mainframe computer (130) and a clustered server (140).

9. Method of claim 6, wherein the message is received (305) from a client device (110₁,110₂,110ₙ), the client device preferably comprises an automated teller machine.

10. Method of claim 6, the workload request characteristic comprises a message type that is determined from an identifier in the message, preferably the identifier identifies a priority of the workload request.

11. Method of claim 6, wherein in the identifying step the workload router (120) applies the set of routing rules to identify (315) the processing platform, preferably at least one routing rule is based on a status of at least one of the processing platforms (130,140) or on a utilization rate of at least one of the processing platforms (130,140).

12. Method of claim 11, wherein the routing rules route (320) the workload request to the first or second processing platform (130,140)
identified (315) in the message;
to balance a load among a plurality of the processing platforms (130,140);
with the lowest latency;
that will complete it first;
that similar message requests have been routed; or
based on an anticipated workload.

## Patentansprüche

1. **System** für intelligentes, dynamisches Workload-Routing, umfassend:
eine erste Verarbeitungsplattform (130, 140) mit einer ersten Eigenschaft;
eine zweite Verarbeitungsplattform (140, 130) mit einer zweiten Eigenschaft;
und einen Workload-Router (120) in Kommunikation mit der ersten Verarbeitungsplattform (130, 140) und der zweiten Verarbeitungsplattform (140,130); wobei der Workload-Router (120) ausgestaltet ist zum Empfangen einer ersten Meldung, die erste Eigenschaft von der ersten Verarbeitungsplattform (130, 140) umfassend;
Empfangen einer zweiten Meldung, die zweite Eigenschaft von der zweiten Verarbeitungsplattform (140, 130) umfassend;
Empfangen einer Meldung, eine Workload-Anfrage mit einer Workload-Anfrageeigenschaft umfassend;
Anwenden eines Routing-Regelwerkes auf die Workload-Anfrage zum Bestimmen, wie die Workload-Anfrage geleitet oder geroutet wird oder werden soll und zum Bestimmen eines Gewichts für das Ergebnis jeder Regel, wobei jedes Ergebnis die erste Verarbeitungsplattform oder die zweite Verarbeitungsplattform (140, 130) identifiziert;
Bestimmen eines gewichteten Durchschnitts (weighted average) der gewichteten Ergebnisse;
Leiten oder Routen der Workload-Anfrage an die erste Verarbeitungsplattform (130, 140) oder die zweite Verarbeitungsplattform (140, 130), basierend auf dem gewichteten Durchschnitt der gewichteten Ergebnisse und mindestens einer der Workload-Anfrageneigenschaften der Workload-Anfrage, der ersten Eigenschaft und der zweiten Eigenschaft.

2. System nach Anspruch 1, wobei die erste Verarbeitungsplattform (130, 140) einen Zentralrechner (130) umfasst und/oder die zweite Verarbeitungsplattform (140, 130) mindestens einen Clusterserver (140) umfasst.

3. System nach Anspruch 1, wobei der Workload-Router (120) ausgestaltet ist zum Leiten der Workload an ein Datenzentrum (data center), die erste Verarbeitungsplattform (130, 140) oder die zweite Verarbeitungsplattform (140, 130) umfassend.

4. System nach Anspruch 1, zusätzlich mindestens ein Client-Gerät (110₁, 110₂, 110ₙ) umfassend, das die Meldung an den Workload-Router leitet, vorzugsweise das mindestens eine Client-Gerät (110₁, 110₂, 110ₙ) einen Geldautomaten (automated teller machine) umfasst.

5. System nach Anspruch 1, wobei die Routing-Regeln eine oder mehrere Regeln zum außer Kraft setzen einer Plattform umfassen, eine Meldungstyp-Filterregel (message-type filter rule), eine Lastverteilungsregel (load balance rule), eine Standartzielregel (default destination rule), eine Warteschlangentiefe-Lastverteilungsregel (queue-depth load balance rule), eine Cap-Regel für die Berechnung von Kosten (compute-cost cap rule), eine Latenzzeit-Minimierungsregel (latency minimization rule), eine Regel bei Nichtverfügbarkeit der Verarbeitungsplattform (processing platform unavailability rule), eine Regel für Zustandmetrik (health metric rule), eine Priorisierungsregel (prioritization rule), oder eine Prognoseregel (predictive rule).

6. **Verfahren** für intelligentes Workload-Routing, die Schritte eines Workload-Routers (120) umfassend,
einen Computerprozessor umfassend zum Empfangen einer Meldung mit einer Workload-Anfrage mit einer Workload-Anfrageeigenschaft;
wobei der Workload-Router (120) eine erste Statusmeldung erhält mit einer ersten Eigenschaft von einer ersten Verarbeitungsplattform (130);
wobei der Workload-Router (120) eine zweite Statusmeldung erhält mit einer zweiten Eigenschaft von einer zweiten Verarbeitungsplattform (140);
wobei der Workload-Router auf die Workload-Anfrage eine Vielzahl von Routing-Regeln anwendet und dem Ergebnis jeder Routing-Regel ein Gewicht zuordnet, wobei jedes Ergebnis die erste Plattform oder die zweite Plattform (130, 140) identifiziert;
wobei der Workload-Router (120) eine der Verarbeitungsplattformen (130, 140) identifiziert (315), an welche die Workload-Anfrage geleitet werden soll oder geleitet wird;
wobei der Workload-Router einen gewichteten Durchschnitt der gewichteten Ergebnisse bestimmt;
und der Workload-Router (120) die Workload-Anfrage an die identifizierte Verarbeitungsplattform leitet (320), basierend auf dem gewichteten Durchschnitt der gewichteten Ergebnisse und mindestens einer der Workload-Anfrageeigenschaften, der ersten Eigenschaft und der zweiten Eigenschaft.

7. Verfahren nach Anspruch 6, wobei der Workload-Router (120) die Workload zu einem Datenzentrum leitet (120), die identifizierte Verarbeitungsplattform (130, 140) umfassend.

8. Verfahren nach Anspruch 6, wobei die Vielzahl der Verarbeitungsplattformen einen Zentralrechner (130) und einen Clusterserver (140) umfasst.

9. Verfahren nach Anspruch 6, wobei die Meldung von einem Client-Gerät (110₁, 110₂, 110ₙ) empfangen (305) wird, das Client-Gerät vorzugsweise einen automatischen Geldautomaten (automated teller machine) umfasst.

10. Verfahren nach Anspruch 6, wobei die Workload-Anfrageeigenschaft einen Meldungstyp umfasst, der bestimmt ist von einem Meldungsidentifizierer, vorzugsweise der Identifizierer eine Priorisierung der Workload-Anfrage identifiziert.

11. Verfahren nach Anspruch 6, wobei während des Identifizierungsschrittes der Workload-Router (120) das Regelwerk anwendet, um die Verarbeitungsplattform zu identifizieren (315), vorzugsweise mindestens eine Routing-Regel auf einem Status basiert von mindestens einer der Verarbeitungsplattformen (130, 140) oder auf einem Auslastungsgrad von mindestens einer der Verarbeitungsplattformen (130, 140).

12. Verfahren nach Anspruch 11, wobei die Routing-Regeln die Workload-Anfrage zu der ersten oder der zweiten Verarbeitungsplattform (130, 140) leiten (320),
die in der Meldung identifiziert (315) ist;
um eine Last auf eine Vielzahl der Verarbeitungsplattformen (130, 140) zu verteilen;
mit der geringsten Latenz;
die sie als erstes vervollständigt;
dass oder mit dem ähnliche Meldungsanfragen (message requests) gesendet wurden; oder
basierend auf einer voraussichtlichen Last.

## Revendications

1. **Système de** routage dynamique intelligent de la charge de travail, comprenant
une première plate-forme de traitement (130 140) ayant une première caractéristique;
une deuxième plate-forme de traitement (140 130) ayant une deuxième caractéristique;
et un routeur de charge de travail (120) en communication avec la première plate-forme de traitement (130,140) et la deuxième plate-forme de traitement (140,130);
le routeur de charge de travail (120) configuré pour
recevoir un premier message comprenant la première caractéristique de la première plate-forme de traitement (130 140);
recevoir un second message comprenant la seconde caractéristique de la seconde plate-forme de traitement (140 130);
recevoir un message comportant une demande de charge de travail comportant une caractéristique de demande de charge de travail;
appliquer un ensemble de règles d'acheminement à la demande de charge de travail pour déterminer comment acheminer la demande de charge de travail et pour attribuer un poids au résultat de chaque règle, dans lequel chaque résultat identifie la première plate-forme de traitement ou la deuxième plate-forme de traitement (140,130);
déterminer une moyenne pondérée des résultats pondérés;
acheminer la demande de charge de travail vers la première plate-forme de traitement (130,140) ou la deuxième plate-forme de traitement (140,130) sur la base de la moyenne pondérée des résultats pondérés et d'au moins une des caractéristiques de la demande de charge de travail, la première caractéristique et la deuxième caractéristique.

2. Système de la revendication 1, dans lequel la première plate-forme de traitement (130, 140) comprend un ordinateur central (130) et/ou la deuxième plate-forme de traitement (140, 130) comprend au moins un serveur en grappe (140).

3. système de la revendication 1, dans lequel le routeur de charge de travail (120) est configuré pour acheminer la charge de travail vers un centre de données comprenant la première plate-forme de traitement (130, 140) ou la deuxième plate-forme de traitement (140, 130).

4. Système de la revendication 1, comprenant en outre au moins un dispositif client (1101, 1102, 110n) qui envoie le message au routeur de charge de travail, de préférence le au moins un dispositif client (1101, 1102, 110n) comprend un guichet automatique.

5. Système de revendication 1, dans lequel les règles d'acheminement comprennent une ou plusieurs des règles suivantes : une règle de priorité de plate-forme, une règle de filtrage de type message, une règle d'équilibrage de charge, une règle de destination par défaut, une règle d'équilibrage de charge de profondeur de file d'attente, une règle de plafonnement des coûts de calcul, une règle de minimisation de la latence, une règle d'indisponibilité de plate-forme de traitement, une règle de mesure de santé, une règle de priorité ou une règle prédictive.

6. **Méthode de routage intelligent** de la charge de travail, comprenant les étapes d'un routeur de charge de travail (120), comprenant un processeur informatique recevant un message comprenant une demande de charge de travail comprenant une caractéristique de demande de charge de travail;
le routeur de charge de travail (120) recevant un premier message d'état comprenant une première caractéristique d'une première plate-forme de traitement (130);
le routeur de charge de travail (120) recevant un deuxième message d'état comprenant une deuxième caractéristique d'une deuxième plate-forme de traitement (140);
le routeur de charge de travail appliquant une pluralité de règles de routage à la demande de charge de travail et attribuant un poids au résultat de chaque règle de routage; dans lequel chaque résultat identifie la première plate-forme ou la deuxième plate-forme (130, 140);
le routeur de charge de travail déterminant une moyenne pondérée des résultats pondérés;
et le routeur de charge de travail (120) acheminant (320) la demande de charge de travail vers la plate-forme de traitement identifiée, sur la base de la moyenne pondérée des résultats pondérés et d'au moins une des caractéristiques de la demande de charge de travail, la première caractéristique et la deuxième caractéristique.

7. Méthode de la revendication 6, dans laquelle le routeur de charge de travail (120) achemine (320) la charge de travail vers un centre de données comprenant la plate-forme de traitement identifiée (130,140).

8. Méthode de la revendication 6, dans laquelle la pluralité de plates-formes de traitement comprend un ordinateur central (130) et un serveur en grappe (140).

9. Méthode de la revendication 6, dans laquelle le message est reçu (305) d'un dispositif client (1101, 1102, 110n), le dispositif client comprend de préférence un guichet automatique.

10. Méthode de la revendication 6, la caractéristique de la demande de charge de travail comprend un type de message qui est déterminé à partir d'un identifiant dans le message, de préférence l'identifiant identifie une priorité de la demande de charge de travail.

11. Méthode de la revendication 6, dans lequel, dans l'étape d'identification, le routeur de charge de travail (120) applique l'ensemble des règles de routage pour identifier (315) la plate-forme de traitement, de préférence au moins une règle de routage est basée sur un état d'au moins une des plates-formes de traitement (130, 140) ou sur un taux d'utilisation d'au moins une des plates-formes de traitement (130, 140).

12. Méthode de la revendication 11, dans laquelle les règles de routage acheminent (320) la demande de charge de travail vers la première ou la deuxième plate-forme de traitement (130,140)
identifié (315) dans le message;
pour équilibrer une charge parmi une pluralité de plateformes de traitement (130 140);
avec la plus faible latence;
qui la complétera en premier lieu;
que des demandes de messages similaires ont été acheminées; ou
sur la base d'une charge de travail prévue.
